# EUROPEAN PATENT APPLICATION

(11) **EP 2 650 840 A1**
(43) Date of publication of application: **16.10.2013**
(21) Application number: 11846326.4
(22) Date of filing: 01.12.2011
(51) Int. Cl.: G06Q 50/06, H02J 1/00, H02J 3/32, H02J 13/00

(54) **ELECTRIC POWER MANAGEMENT SYSTEM**

(30) Priority: 08.12.2010 JP 2010273981
(71) Applicant: Sony Corporation, Tokyo 108-0075 (JP)
(72) Inventor: ISHIBASHI, Yoshihito, Tokyo 108-0075 (JP)
(74) Representative: Mills, Julia
(86) International application number: PCT/JP2011/077777
(87) International publication number: WO 2012/077566

(57) **Abstract**

Provided is a power management system including two or more sites. The two or more sites are connected by a distribution network including a power buying line on which power is bought, a power selling line on which power is sold, and a communication line on which information is communicated. Each site includes a power generating apparatus generating power using natural energy, and a power transmission/reception control unit transmitting power generated by the power generating apparatus to the distribution network and receiving power from the distribution network. The power transmission/reception control unit is operable, when power is sold by transmitting the power generated by the power generating apparatus to the distribution network, to transmit information necessary for selling power to the communication line of the distribution network.

## Description

### Technical Field

The present disclosure relates to a power management system.

### Background Art

Aside from supplying power generated at power stations to businesses and households as contracted customers, in recent years power companies have also bought power generated by natural energy generating systems, such as solar power generating systems, installed at households or the like. A number of technologies relating to the purchasing of power by power companies have been developed (see for example, Patent Literature 1 and Patent Literature 2).

### Citation List

### Patent Literature

Patent Literature 1: JP 2008-29104A
Patent Literature 2: JP 2010-16989A

### Summary of Invention

### Technical Problem

At present, power companies act as intermediaries for the trading of power. That is, in a typical flow, a power company buys power generated by a solar power generating system installed at one household and then sells such power to another household. However, with an existing power trading system, when power generated by a household is bought up by a power company, it is not known to whom such power will be sold. Since the power company will merely supply the bought-up power as it is to another household, the buyer of such power will also be unable to grasp where the power was generated.

Although a case where power generated by a household or the like is initially stored in a battery and the power stored in the battery is then sold from the household to the power company is also conceivable, even in such case, the trading of power will still be carried out via the power company, so that the buyer will be unable to grasp where the power was generated in the same way as before.

In addition, if solar power generating systems become more widespread in the households and the like from now on, there will be an expansion in the bought-up power and the risk of the entire system becoming unstable, making it possible to imagine a situation where it is difficult for the power company to buy up the power generated by every household.

For this reason, the present disclosure was conceived in view of the problem described above and aims to provide a novel and improved power management system capable of efficiently managing the trading of power generated by a natural energy generating device installed in the home or the like.

### Solution to Problem

According to an embodiment of the present disclosure, there is provided a power management system including two or more sites. The two or more sites are connected by a distribution network including a power buying line on which power is bought, a power selling line on which power is sold, and a communication line on which information is communicated. Each site includes a power generating apparatus generating power using natural energy, and a power transmission/reception control unit transmitting power generated by the power generating apparatus to the distribution network and receiving power from the distribution network. The power transmission/reception control unit is operable, when power is sold by transmitting the power generated by the power generating apparatus to the distribution network, to transmit information necessary for selling power to the communication line of the distribution network.

Each site further may include a battery server storing the power generated by the power generating apparatus.

The power management system may further include a schedule server in which information relating to a schedule transmitted from each site via the communication line is registered. The schedule server may control trading of power between sites based on the schedule registered from each site.

If power is not sold as planned at a planned time for selling power registered in the schedule server, control may be carried out in a manner that power is supplied as planned to the sites that have planned to buy power.

The power management system may further include a settlement server making a settlement for power traded between the respective sites.

The settlement server may make a settlement for power traded between the respective sites using a trading certificate in which information on an amount of power being traded, identification information on a seller and/or a buyer of power is written and which is transmitted from each site via the communication line.

The trading certificate may include an electronic signature that certifies a seller and/or buyer of power attached at each site.

The distribution network may distribute direct current power.

The power transmission/reception control unit may transmit direct current power generated by the power generating apparatus in an intact way to the distribution network.

According to an embodiment of the present disclosure, there is provided a power management system including two or more sites. The two or more sites are connected by a distribution network including a power buying line on which power is bought, a power selling line on which power is sold, and a communication line on which information is communicated. Each site includes a power generating apparatus generating power using natural energy, and a power transmission/reception control unit transmitting power generated by the power generating apparatus to the distribution network and receiving power from the distribution network. The power transmission/reception control unit is operable, when power generated by the power generating apparatus of another of the sites is bought by receiving the power from the distribution network, to receive information necessary for buying power from the communication line of the distribution network.

### Advantageous Effects of Invention

According to the present disclosure, it is possible to provide a novel and improved power management system capable of efficiently managing the trading of power generated by a natural energy generating device installed in the home or the like.

### Brief Description of Drawings

[Fig. 1] Fig. 1 is a diagram useful in explaining an overview of a power management system 1 according to an embodiment of the present disclosure.
[Fig. 2] Fig. 2 is a diagram useful in explaining a DC electricity grid 3 and households 100a, 100b extracted from the power management system 1 according to an embodiment of the present disclosure shown in Fig. 1.
[Fig. 3] Fig. 3 is a diagram useful in explaining an example composition of a trading certificate 200 used when trading power using the power management system 1 according to an embodiment of the present disclosure.
[Fig. 4] Fig. 4 is a diagram useful in explaining a clearing center 300 that carries out settlements for trading of power and information exchanged between respective users and the clearing center 300.
[Fig. 5] Fig. 5 is a diagram useful in explaining an example configuration of the power management system 1 according to an embodiment of the present disclosure.
[Fig. 6] Fig. 6 is a flowchart showing one example of the flow of trading of power between users using the power management system 1 according to an embodiment of the present disclosure.
[Fig. 7] Fig. 7 is a diagram useful in explaining an example configuration of an existing power trading system.

### Description of Embodiments

Hereinafter, preferred embodiments of the present invention will be described in detail with reference to the appended drawings. Note that, in this specification and the drawings, elements that have substantially the same function and structure are denoted with the same reference signs, and repeated explanation is omitted.

The following description is given in the order indicated below.
1. Existing Power Trading System
2. Embodiments of the Present Disclosure
   2-1. Overview of Power Management System
   2.2 Flow of Trading of Power
3. Conclusion

### 1. Existing Power Trading System

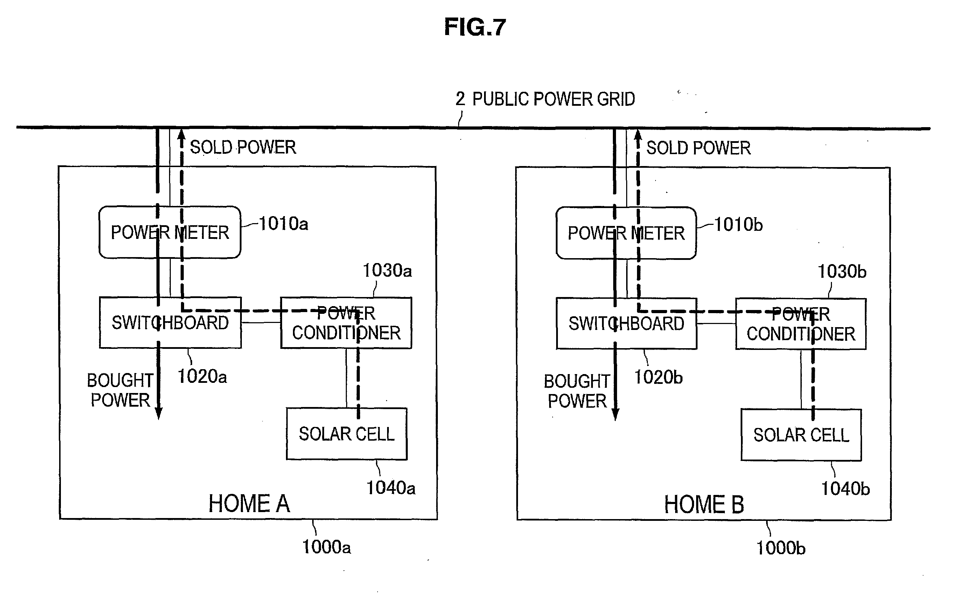

First, before describing preferred embodiments of the present disclosure, an example configuration of and problems with an existing power trading system will be described. Fig. 7 is a diagram useful in explaining an example configuration of an existing power trading system.

In an existing power system, by signing a contract with a power company, a user uses power flowing on a public power grid 2. It is possible to grasp usage of power flowing on the public power grid 2 using a power meter, a monthly electricity bill is decided based on the value of a power meter, and payment of such electricity bill is carried out using a specified method.

According to existing methods, after DC power generated by solar cells 1040a, 1040b installed at households 1000a, 1000b has been converted to AC power by power conditioners 1030a, 1030b, such power is distributed within the home via switchboards 1020a, 1020b and when power is sold, such power is transmitted from the switchboards 1020a, 1020b via power meters 1010a, 1010b to the public power grid 2. Note that although the purchasing of power and the selling of power are grasped by the power meters 1010a, 1010b in the configuration shown in Fig. 7, the purchasing of power and the selling of power may be grasped by separate power meters.

On buying up power generated at households, a power company supplies such bought-up power together with the power generated at power stations to the public power grid 2. Another user who purchases and uses power flowing on the public power grid 2 is incapable of distinguishing whether such power that was power generated by the power company at a power station or is power that was generated by another user using a solar cell.

With an existing power trading system the trading of power is carried out in this way via the existing public power grid 2. That is because this method is convenient for the power company that supplies power.

In this way, an existing power trading system carries out the purchasing of power and selling of power between contracted customers with the power company as an intermediary. However, as described earlier, with an existing power trading system, when power generated at a household is bought up by the power company, it is not known who the power will be sold to. Also, since the power company merely supplies the bought-up power as it is to another household, the household that bought the power is unable to grasp where such power was generated.

Also, if solar power generating systems become increasingly widespread in households and the like from now on, there will be an expansion in the bought-up power and the risk of an entire existing power trading system becoming unstable, making it possible to imagine a situation it is difficult for the power company to buy up the power generated by every household.

For this reason, a power management system according to an embodiment of the present disclosure described below does not supply power generated at respective homes and the like to an existing public power grid but instead includes a separate distribution network and carries out the trading of power via such distribution network. When power is traded, it also becomes possible for the entire system to grasp when, where and by whom power was sold and by whom and where the generated power was bought.

By constructing a power management system in this way, the provision of a distribution network that is independent to the supplying of power by an existing public grid means that compared to an existing power trading system, smart trading of power is possible and it is possible to purchase and sell power with more flexibility.

A power management system according to an embodiment of the present disclosure will now be described in detail with reference to the attached drawings.

### 2. Embodiments of the Present Disclosure

### 2-1. Overview of Power Management System

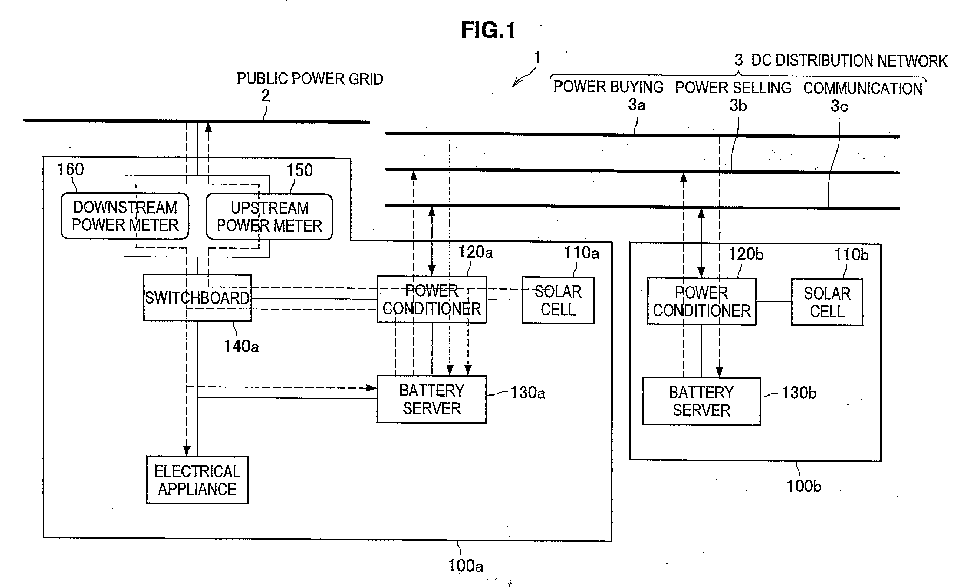

Fig. 1 is a diagram useful in explaining an overview of a power management system 1 according to an embodiment of the present disclosure. An overview of the power management system 1 according to an embodiment of the present disclosure is described below with reference to Fig. 1.

As shown in Fig. 1, the power management system 1 according to an embodiment of the present disclosure includes a public power grid 2 and a DC distribution network 3.

The public power grid 2 receives power generated by power stations of a power company. The public power grid 2 is set up by the power company and the power generated by the power station is sent to a household 100a that has signed a contract with the power company.

Meanwhile, the DC distribution network 3 is a DC distribution network provided separately to the public power grid 2 and is provided in order to trade power generated by power generating devices, such as solar cells, provided in respective homes. As shown in Fig. 1, the DC distribution network 3 includes a power buying line 3a used for buying up power, a power selling line 3b for selling power that has been bought-up, and a communication line 3c for communicating various types of information that accompany the trading of power. Note that the communication path for communicating various types of information that accompany the trading of power may be wired or may be wireless.

Although the DC distribution network 3 may be installed by the power company that installed the public power grid 2, as described earlier, since it is imagined that the power company that installs the public power grid 2 may not be able to buy up the power generated by power generating devices such as solar cells provided in every household, the DC distribution network 3 may be installed by a separate organization or enterprise to the power company that installed the public power grid 2.

If the DC distribution network 3 is installed by a separate organization or enterprise to the power company that installed the public power grid 2, the trading of power generated by a power generating device such as solar cells provided in respective households may be mainly carried out with such organization or enterprise as an intermediary.

Note that although a case where the public power grid 2 is connected to only a household 100a and the DC distribution network 3 is connected to the households 100a, 100b is illustrated in Fig. 1 as an overview of the power management system 1 according to an embodiment of the present disclosure, it should be obvious that the present disclosure is not limited to this example. That is, both of the household 100a and the household 100b may be connected to the public power grid 2 and other households or the like may also be connected.

As shown in Fig. 1, the household 100a is provided with a solar cell 110a, a power conditioner 120a, a battery server 130a, a switchboard 140a, an upstream power meter 150, and a downstream power meter 160.

The solar cell 110a is an apparatus capable of being irradiated with sunlight and generating power. At the household 100a, in addition to it being possible for electrical appliances to operate using power generated by the solar cell 110a, the power generated by the solar cell 110a can be sold via the public power grid 2 and/or the DC distribution network 3.

The power conditioner 120a carries out various processes on power generated by the solar cell 110a. As one example, the power conditioner 120a converts DC power generated by the solar cell 110a to AC power for use by various electrical appliances (not shown) in the household 100a and outputs to the switchboard 140a.

Also, the power conditioner 120a is capable of outputting the power generated by the solar cell 110a to the battery server 130a to charge a battery incorporated in the battery server 130a. The power stored in the battery server 130a may be outputted via the power conditioner 120a to the DC distribution network 3 and/or converted to AC power at the power conditioner 120a.

If the power conditioner 120a is connected to the power selling line, the power buying line, and the communication line of the DC distribution network 3 and the trading of power is carried out via the DC distribution network 3, as one example the power conditioner 120a is used to transmit information relating to traded power on the communication line to a server or the like (not shown), and the trading of power based on the transmitted information is carried out via the power conditioner 120a. Examples of the information relating to the traded power transmitted from the power conditioner 120a include the time at which power is sold and the sold amount of power, the time at which power is bought and the bought amount of power, identification information for identifying the seller and the buyer of the power, and electronic signatures of the seller and the buyer of the power.

The battery server 130a internally includes a battery (secondary cell), and is constructed so as to be capable of being charged by power generated by the solar cell 110a, power supplied from the public power grid 2, and power supplied from the DC distribution network 3. Note that if the battery server 130a is charged by power supplied from the public power grid 2, the battery server 130a may be charged after such power has been converted to DC by the power conditioner 120a or an AC-DC convertor may be provided inside the battery server 130a and a charging process of the battery server 130a may be carried out after internal conversion to DC.

In addition to using power stored in the battery server 130a to operate various electrical appliances in the household 100a, it is also possible for the user of the power management system 1 to sell such power by outputting via the power conditioner 120a to the DC distribution network 3.

Note that as the form of the battery server 130a, it is possible to use a simple apparatus internally equipped with a battery or an apparatus such as an electric car or an electric motorcycle which is capable of running with a battery as a power source.

The switchboard 140a distributes power sent from the public power grid 2 and power sent from the power conditioner 120a to various electrical appliances (not shown) in the household 100a. Also, when the user sells power by transmitting the power to the public power grid 2, the switchboard 140a sends the power to the public power grid 2 as necessary via the upstream power meter 150.

The upstream power meter 150 is a meter that measures power transmitted from the switchboard 140a to the public power grid 2. When the user sells power by transmitting the power to the public power grid 2, a settlement process is carried out based on the amount of power measured by the upstream power meter 150.

The downstream power meter 160 is a meter that measures power transmitted from the public power grid 2. When the user makes use of power transmitted using the public power grid 2, a settlement process is carried out based on the amount of power measured by the downstream power meter 160.

By using this configuration inside the household 100a, the user is capable of trading the power generated by the household 100a not only via the public power grid 2 and but also via the DC distribution network 3. If a situation occurs where trading via the public power grid 2 is no longer possible, the user is capable of trading the power generated by the solar cell 110a via the DC distribution network 3, with it also being possible to sell power via the DC distribution network 3 even when the selling of power via the public power grid 2 is possible.

In Fig. 1, a different household 100b to the household 100a is shown. As shown in Fig. 1, the household 110b includes a solar cell 110b, a power conditioner 120b, and the battery server 130b. Although to simplify the explanation, a configuration corresponding to the switchboard 140a, the upstream power meter 150, and the downstream power meter 160 illustrated for the household 100a are not shown for the household 100b in Fig. 1, it should be obvious that the household 100b may include a configuration corresponding to such components.

This completes the description of an overview of the power management system according to an embodiment of the present disclosure using Fig. 1. Next, the flow of trading of power using the power management system 1 according to an embodiment of the present disclosure will now be described.

### 2-2. Flow of Trading of Power

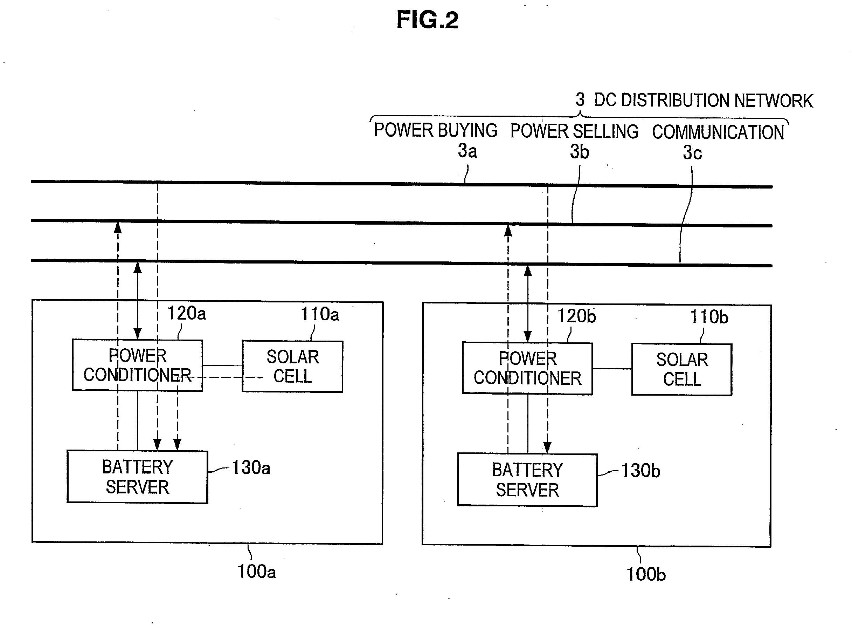

Fig. 2 is a diagram useful in explaining the DC distribution network 3 and the households 100a, 100b extracted from the power management system 1 according to the embodiment of the present disclosure shown in Fig. 1.

In Fig. 2, a flow is shown where in the household 100a, power generated by the solar cell 110a is initially stored in the battery server 130a and such power stored in the battery server 130a is sold via the DC distribution network 3. Fig. 2 also shows a flow where power is bought by the household 100b via the DC distribution network 3 and the bought power is stored in the battery server 130b.

The flow of trading of power via the DC distribution network 3 is described below. The power generated by the solar cell 110a installed in the household 100a is temporarily stored via the power conditioner 120a in the battery server 130a. Note that the storage of power in the battery server 130a may be storage of power where power is bought in advance via the public power grid (not illustrated in Fig. 2) during the night when grid output is cheap and such power is used later.

It should be obvious that the power stored in the battery server 130a may also be used by operation of the electrical appliances used in the household 100a. However, in a case where power is stored in the battery server 130a but such power will not be used, it is possible to decide a seller in advance and to sell such power. Here, examples of where power will not be used include a case where electrical appliances are hardly used due to absence for a vacation or the like.

In the past, the trading of power was carried out by converting the power stored in the battery server 130a from DC to AC using the power conditioner 120a and supplying such power to an existing power grid (the public power grid 2). In the present embodiment, the trading of power is carried out by the power conditioners 120a, 120b supplying the power stored in the battery server 130a in its DC state to the DC distribution network 3. By doing so, it is possible to eradicate power losses that accompany conversion from DC to AC and to sell power while thoroughly suppressing energy losses.

The power that has been supplied from the household 100a to a power buying line 3a is further supplied from the power buying line 3a to the power selling line 3b which is connected to the power buying line 3a at a specified location and is supplied to a battery server of the decided buyer (here assumed to be the battery server 130b of the household 100b). The power that is supplied to the battery server 130b and stored in the battery server 130b is converted as necessary to AC power by the power conditioner 120b, is supplied to respective electrical appliances (not shown) inside the household 100b and is used as operation power of such electrical appliances.

Note that although the present embodiment is configured so that the power generated by the solar cell 110a is initially stored in the battery server 130a, the present disclosure is not limited to this example. That is, it is possible to use a configuration such that when the trading of power is carried out, power generated by the solar cell 110a is supplied directly from the power conditioner 120a to the DC distribution network 3. However, to make it possible to store power and sell power as necessary, it is desirable to use a configuration that includes the battery servers 130a, 130b as shown in Figs. 1 and 2.

Settlements to and from users that trade power via the DC distribution network 3 may be carried out using a clearing center, for example. Each user may transmit a trading certificate to a clearing center and the clearing center may carry out a settlement process for each user based on the content of such trading certificate.

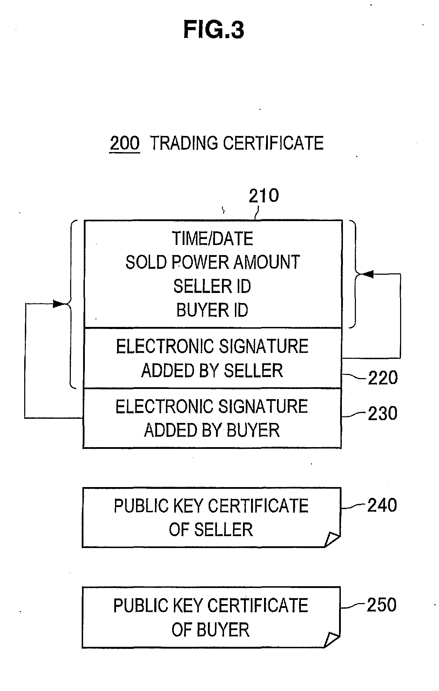

Fig. 3 is a diagram useful in explaining an example composition of the trading certificate 200 used when trading power using the power management system 1 according to the embodiment of the present disclosure. An example composition of the trading certificate 200 will be now described below using Fig. 3.

The trading certificate 200 shown in Fig. 3 includes trade information 210 composed of a time/date, a sold power amount, a seller ID, and a buyer ID, an electronic signature 220 added by the seller, and an electronic signature 230 added by the buyer. When power is traded using the trading certificate 200, a public key certificate 240 of the seller and a public key certificate 250 of the buyer are used.

By carrying out the trading of power using a trading certificate 200 such as that shown in Fig. 3, appropriate trading of power can be carried out between the seller and the buyer of power. It should be obvious that the composition of the trading certificate 200 is not limited to the example shown in Fig. 3 and that the inclusion relationship between the electronic signature 220 added by the seller and the electronic signature 230 added by the buyer may be reversed.

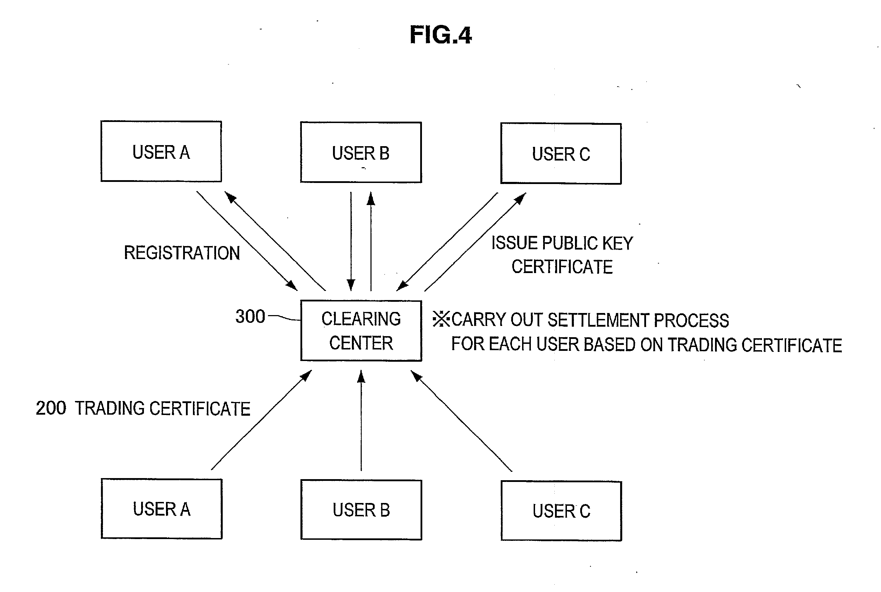

Fig. 4 is a diagram useful in explaining the clearing center 300 that carries out settlements for the trading of power and the information that respective users exchange with the clearing center 300. As shown in Fig. 4, when a user of the power management system 1 has registered in the system, the clearing center 300 issues a public key certificate to the user. It is desirable for the clearing center 300 to strictly carry out identity verification and the like when issuing a public key certificate. After this, when the trading of power is actually carried out between users of the power management system 1, each user transmits a trade certificate to the clearing center 300. The clearing center 300 carries out a settlement process for each user based on such trade certificate. Note that it is desirable for the seller of the power to transmit power after verifying the electronic signature of a received trade certificate and confirming that it is an electronic signature genuinely added by the buyer. Alternatively, it is desirable for power to be transmitted after the seller of power has sent the received trade certificate to the clearing center 300 and received a confirmation completion process from the clearing center 300.

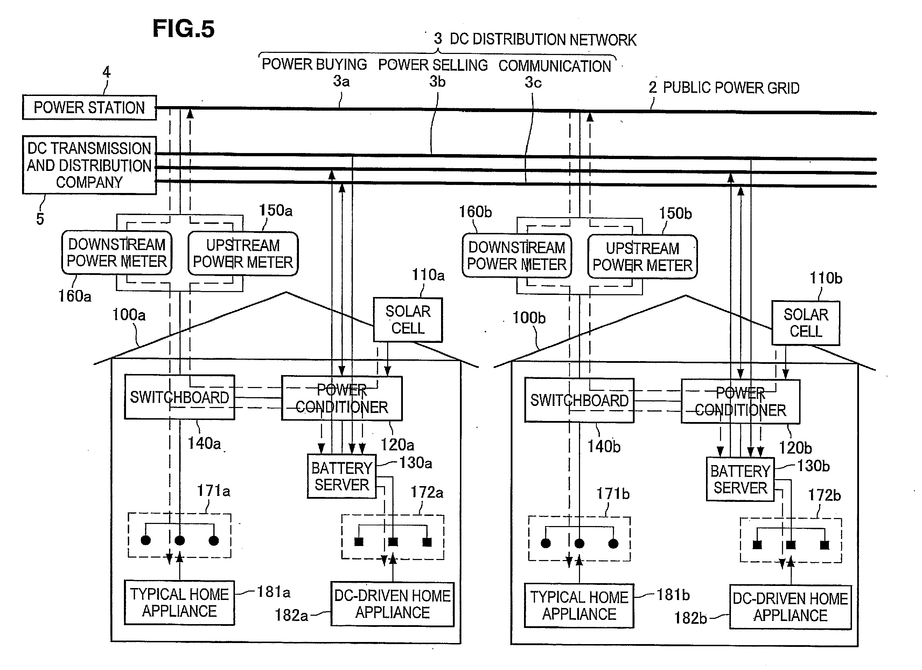

The power management system 1 according to the embodiment of the present disclosure includes a DC power transmission and distribution company (i.e., a power distribution company equipped with a DC transmission and distribution system). Such company has a role in transmitting power from someone who wishes to sell power to someone who wishes to purchase power. Fig. 5 is a diagram useful in explaining an example configuration of the power management system 1 according to an embodiment of the present disclosure.

In addition to having the traditional role of a power company, a DC power transmission and distribution company 5 may also serve in a role as the clearing center 300 described earlier. According to this method, a buyer of power can know whose power was bought. With an existing method, a buyer of power did not know who and where the bought power was transmitted from.

The flow when buying power using the power management system 1 according to an embodiment of the present disclosure will now be described. When there is insufficient electricity in the battery of a user of the power management system 1, such user searches a DC power transmission and distribution company or another cloud computer. As a result of such search, the user finds power that is available for sale or power that may become available for sale at the DC power transmission and distribution company and can make a bid.

If a bid has been made from a user who wishes to buy power, an order is made to the seller via the DC power transmission and distribution company described above or another cloud computer. By doing so, it is possible to take up power from the seller via the power buying line 3a and to send the power via the power selling line 3b to the bidder. It should be obvious that when power is sold, the trade certificate shown earlier is exchanged and power is traded in accordance with the result of such exchanging. More specifically, if a buy order has been issued from a bidder and a seller has accepted such buy order, electronic data up to the code 210 and the code 220 in the trading certificate 200 shown in Fig. 3 is generated and sent from the seller to the buyer. The buyer who has received such electronic data adds their own electronic signature shown by the code 230 and sends back the electronic data to the seller. After the exchanging of a trading certificate has been carried out both the seller and the buyer verify the electronic signatures and/or the power distribution company participates in such verification of electronic signatures before power is transmitted and distributed between the seller and the buyer.

Although the power management system 1 according to an embodiment of the present disclosure is capable of carrying out the trading of power in this way, as another example, an example using a schedule will now be shown. In a case where a user of the power management system 1 uses a scheduler, it is possible to provide a schedule server that manages the schedules of users of the power management system 1 inside or outside the power management system 1. In the present embodiment, it is assumed that the schedule server that manages the schedules of users of the power management system 1 is included in the DC power transmission and distribution company 5.

By using this schedule server, it would be conceivably possible to obtain information such as "there is surplus power due to the user of the power management system 1 being out, on holiday, or the like", or "there is surplus daytime power due to the user of the power management system 1 being out at work or the like". It should be obvious that due to privacy concerns, it is desirable for such information to not be publically available.

For this reason, when a user of the power management system 1 inputs his/her own schedule, the user of the power management system 1 is asked to confirm whether to sell the surplus power calculated from such schedule to the outside. Here, if the user of the power management system 1 has outputted an instruction to sell power, information on how much power is to be sold for what price is generated and registered in the schedule server. At this time also, it is desirable to hide the personal information.

Meanwhile, it is possible for a person (referred to as the user B, for example), out of the other users of the power management system 1, for which power demand is expected to increase due to guests or the like to view the power selling information from the user (referred to as the user A, for example) of the power management system 1 registered in the schedule server and to make a bid.

As a result of the user B making a bid, the user B is capable of buying a planned amount of power at a planned time from the user A. The payment of the electricity bill may be carried out via the DC power transmission and distribution company, for example.

Note that it is not known whether it will be possible to actually buy the bid amount of electricity until the planned time is actually reached. As one example, there is a conceivable case where the weather worsens and it is not possible for the solar cell to generate power. For this reason, the ability to buy the bid amount of electricity in reality is guaranteed by the DC power transmission and distribution company. The DC power transmission and distribution company may store backup electricity and release such electricity as necessary.

For this reason, for a user who registered a planned sale of power in the schedule server but was unable to actually sell the power (for example, if the user used too much power and there was no electricity to sell), the DC power transmission and distribution company may charge a suitable penalty. It should be obvious that depending on the reason, a user who registered a planned sale of power but was unable to actually sell the power does not need to be charged a penalty. In this case, the user who plans to buy power may be supplied with power from the DC power transmission and distribution company as described earlier or may simply buy power from the grid. The user who planned to sell power but was unable to sell the power may be billed for the difference between the electricity bill that was bid and the actual purchase price.

Note that if the user of the power management system 1 has inputted his/her own schedule and indicated the selling of power, the schedule server may store information for determining whether it is possible to sell power as planned at such time. As examples, such information may be information on the weather forecast or information on the installed state of the solar cell panels owned by such user, and the information on the installed state of the solar cell panels may include map information, information on the environment near the installed solar cell panels, and the like.

When the user of the power management system 1 has registered his/her own schedule in the schedule server, the schedule server may have such user input whether power is to be sold.

When the schedule and planned sale of power of a user of the power management system 1 is inputted into the schedule server, the schedule server, for example, may automatically estimate the amount of power the user is capable of selling and register such information, the power conditioner 120a may be set so as to be capable of automatically selling power on reaching the planned time, and it may be possible for the user to set whether power is to be sold automatically. If a setting is made so that the automatic selling of power is permitted, the power conditioner 120a sells power by automatically outputting the power to the DC distribution network 3 on reaching the planned time.

If the user has set that the automatic selling of power is not permitted, the power conditioner 120a has the user carry out a confirmation process for the selling of power at the time where the selling of power is planned or beforehand. If confirmation of the selling of power is to be given by the user, the power conditioner 120a outputs a confirmation message about whether to sell power at or before the planned time to invite the user to give confirmation. If the user has not permitted the selling of power in response to such confirmation message, no power will be sold even if the planned time is reached. Note that such series of processes may be carried out by system settings for schedule management at the schedule server.

Meanwhile, a user who wishes to buy power is capable of inputting a schedule into the schedule server and the schedule server may calculate the planned purchase amount of power according to the inputted schedule.

For example, there is a conceivable case where a user who wishes to buy power configures a schedule where the user plans to make a long trip by electric car and it is necessary to charge the electric car in advance. First, a user who wishes to buy power registers the schedule and the destination in the schedule server. The schedule server automatically calculates the amount of charging necessary for the electric car to run from the position of the user's house (which should preferably be registered in advance in the schedule server) and the destination registered by the user. At such time, although the calculated amount of charging is given by subtracting the present battery charge of the electric car from the estimated power usage to the destination, in order to provide some leeway, a specified extra amount may be added to such amount.

When power is bought, the user may be allowed to decide whether power is to be bought with priority to low-cost power or bought with priority to green energy, or the power to be bought with priority may be set in advance and then automatically bought based on the setting. Such settings may be registered in advance in the schedule server. After the power that the user is to buy with priority has been decided, the actual purchasing process for power and the charging of the electric car are carried out (by the power conditioner 120a, for example). It should be obvious that if a power generating apparatus is installed at the household, an amount of power produced by subtracting the amount of power generated by such power generating apparatus may be bought.

Since it would be conceivable for such process carried out by the buyer to buy only some of the power to be sold from a household that sells power, not the entire amount of power for sale, it is desirable to have the seller give consent to selling only some of the power to be sold, not the entire amount. It should be obvious that it is possible for such consent process to use the trading certificate 200 described earlier, for example.

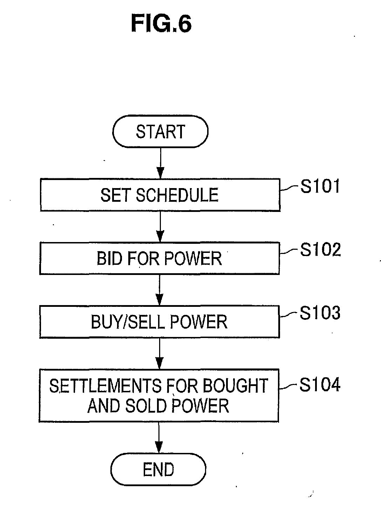

Fig. 6 is a flowchart showing one example of the flow of trading of power between the users using the power management system 1 according to an embodiment of the present disclosure. One example of the flow of trading of power between users using the power management system 1 according to an embodiment of the present disclosure will now be described using Fig. 6.

A user who wishes to sell power sets a schedule in advance (step S101). The set schedule is registered in a schedule server that manages the schedule of each user. By having the user who wishes to sell power set the schedule, it is possible to grasp which user is attempting to sell power and in what time slot.

A user who wishes to buy power accesses the schedule server and confirms a schedule set by a user who wishes to sell power. The user who wishes to buy power carries out bidding for power on sale from users who wish to sell power (step S102).

When time/date of the sale of power is reached, the user who wishes to sell power outputs the power to the DC distribution network 3 and the user who wishes to buy the power buys the power outputted to the DC distribution network 3 (step S103). When the trading of power is completed, settlements for the power that has been bought and sold by the user who sold the power and the user who bought the power are made by the clearing center 300 (step S104). When such settlements for power are made, the trading certificate 200 described earlier is used. By using the trading certificate 200, it is possible for the clearing center 300 to grasp how much power has been sold from which user to which user.

Note that it is not a problem for a plurality of people to sell power and for a plurality of power to be supplied to the power buying line. Such electricity moves to the DC power transmission and distribution company and after that reaches a buyer via the power selling line. Incidentally, if the buyer was unable to buy power due to some kind of trouble, the power is temporarily stored at the DC power transmission and distribution company.

Note that although a system where power is transmitted and received as DC by the DC distribution network 3 has been described for the power management system 1 according to an embodiment of the present disclosure described earlier, the present disclosure is not limited to this example. That is, the power that is traded may be processed not as DC but as AC. Also, although solar cells are given as examples of natural energy generating devices provided in each household in the power management system 1 according to an embodiment of the present disclosure described above, for the present disclosure, the natural energy generating devices are not limited to this example. The present disclosure is also not limited to natural energy obtained using sunlight, the force of the wind, or the like and the expression "natural energy" for the present disclosure is assumed to include a variety of energy sources where it is difficult to keep the generated amount of power constant, such as power generated by manpower.

### 3. Conclusion

The power management system 1 according to an embodiment of the present disclosure described above is capable of specifying the user who is selling power and the user who is purchasing power, which was not possible with a traditional grid, and is capable of smart power management that was not possible with an existing power trading system.

With an existing power trading system, when power was bought, it was not possible to grasp who and where the power was generated. Also, with the advancing spread of solar cell panels, there is the risk that an existing power company will become unable to buy power from every household, and the problem in such case of it not being possible to efficiently make use of the power that has been generated.

With the power management system 1 according to an embodiment of the present disclosure, when power is traded, since power is transmitted and received via a grid (the DC distribution network 3) that is separate to an existing public power grid, there is no risk of an existing power company becoming unable to buy power from every household. Also, since information on the seller of power and information on the buy of power is exchanged, it becomes possible to grasp by whom and where power was generated.

Also, with the power management system 1 according to an embodiment of the present disclosure, by carrying out the trading of power in combination with schedule processing, in a case such as where power is generated by a solar cell but there is no opportunity to use such power, by selling the generated power to another person, it is possible to make efficient use of the generated power.

The preferred embodiments of the present invention have been described above with reference to the accompanying drawings, whilst the present invention is not limited to the above examples, of course. A person skilled in the art may find various alternations and modifications within the scope of the appended claims, and it should be understood that they will naturally come under the technical scope of the present invention.

### Reference Signs List

- 1: Power management system
- 2: Public power grid
- 3: DC distribution network
- 3a: Power buying line
- 3b: Power selling line
- 3c: Communication line
- 100a, 100b: Household
- 110a, 110b: Solar cell
- 120a, 120b: Power conditioner
- 130a, 130b: Battery server
- 140a, 140b: Switchboard
- 150: Upstream power meter
- 160: Downstream power meter
- 200: Trading certificate
- 300: Clearing center

## Claims

1. A power management system comprising:
two or more sites,
wherein the two or more sites are connected by a distribution network including a power buying line on which power is bought, a power selling line on which power is sold, and a communication line on which information is communicated,
wherein each site includes
a power generating apparatus generating power using natural energy, and
a power transmission/reception control unit transmitting power generated by the power generating apparatus to the distribution network and receiving power from the distribution network,
wherein the power transmission/reception control unit is operable, when power is sold by transmitting the power generated by the power generating apparatus to the distribution network, to transmit information necessary for selling power to the communication line of the distribution network.

2. The power management system according to claim 1,
wherein each site further includes a battery server storing the power generated by the power generating apparatus.

3. The power management system according to claim 1, further comprising:
a schedule server in which information relating to a schedule transmitted from each site via the communication line is registered,
wherein the schedule server controls trading of power between sites based on the schedule registered from each site.

4. The power management system according to claim 3,
wherein, if power is not sold as planned from a seller at a planned time for selling power registered in the schedule server, control is carried out in a manner that power is supplied as planned to the sites that have planned to buy power.

5. The power management system according to claim 1, further comprising:
a settlement server making a settlement for power traded between the respective sites.

6. The power management system according to claim 5,
wherein the settlement server makes a settlement for power traded between the respective sites using a trading certificate in which information on an amount of power being traded, identification information on a seller and/or a buyer of power is written and which is transmitted from each site via the communication line.

7. The power management system according to claim 6,
wherein the trading certificate includes an electronic signature that certifies a seller and/or buyer of power attached at each site.

8. The power management system according to claim 1,
wherein the distribution network distributes direct current power.

9. The power management system according to claim 1,
wherein the power transmission/reception control unit transmits direct current power generated by the power generating apparatus in an intact way to the distribution network.

10. A power management system comprising:
two or more sites,
wherein the two or more sites are connected by an distribution network including a power buying line on which power is bought, a power selling line on which power is sold, and a communication line on which information is communicated,
wherein each site includes
a power generating apparatus generating power using natural energy, and
a power transmission/reception control unit transmitting power generated by the power generating apparatus to the distribution network and receiving power from the distribution network,
wherein the power transmission/reception control unit is operable, when power generated by the power generating apparatus of another of the sites is bought by receiving the power from the distribution network, to receive information necessary for buying power from the communication line of the distribution network.
